(19) Europäisches Patentamt
European Patent Office
Office européen des brevets

(11) Publication number: **0 268 437 A2**

# (12) EUROPEAN PATENT APPLICATION

(21) Application number: **87310044.0**

(22) Date of filing: **13.11.87**

(51) Int. Cl.[4]: **C 08 G 63/68**
C 08 G 77/42, C 08 G 81/00

(30) Priority: **17.11.86 JP 273518/86**

(43) Date of publication of application:
**25.05.88 Bulletin 88/21**

(84) Designated Contracting States:
**AT BE CH DE ES FR GB GR IT LI LU NL SE**

(71) Applicant: **POLYPLASTICS CO. LTD.**
**30, Azuchimachi 2-chome**
**Higashi-ku Osaka-shi Osaka (JP)**

(72) Inventor: **Nakane, Toshio**
**885-11, Miyajima**
**Fuji-shi Shizuoka (JP)**

**Hijikata, Kenji**
**8-8, Fujimidai**
**Mishima-shi Shizuoka (JP)**

**Kageyama, Yukihiko**
**815, Dogenjicho**
**Fuji-shi Shizuoka (JP)**

**Takahashi, Katsuhiko**
**324, Miyashita**
**Fuji-shi Shizuoka (JP)**

(74) Representative: **Jackson, Peter et al**
**HYDE, HEIDE & O'DONNELL 146 Buckingham Palace Road**
**London SW1W 9TR (GB)**

## (54) Silicon-containing copolyester and method of producing same.

(57) A silicon-containing copolyester in the form of a block copolymer consists of 1 ~ 99% by weight of a siloxane segment expressed by the following general formula (A) and 99 ~ 1% by weight of a polyester segment expressed by the following general formula (B), wherein the polymerization degree of the siloxane segment is 1 ~ 2000 and the polymerization degree of the polyester segment is 1 ~ 1000:

$$-\!\left(\overset{CH_3}{\underset{CH_3}{Si}}O\right)_m \overset{CH_3}{\underset{CH_3}{Si}}- \qquad (A)$$

(in which m represents a value of 1 ~ 2000)

$$-\!\left(\overset{O}{\overset{\|}{C}}-R_1-\overset{O}{\overset{\|}{C}}-O-R_2-O\right)_n$$

or (B)

$$-\!\left(\overset{O}{\overset{\|}{C}}-R_1-O-\overset{O}{\overset{\|}{C}}-R_2-O\right)_n$$

(in which $R_1$ represents one or more kinds of radicals selected from aromatic bivalent radicals having 6 ~ 12 carbon atoms or aliphatic bivalent radicals having 4 ~ 20 carbon atoms, $R_2$ represents one or more kinds of radicals selected from aromatic bivalent radicals having 6 ~ 20 carbon atoms or aliphatic bivalent radicals having 2 ~ 20 carbon atoms, and n represents a value of 1 ~ 1000).

EP 0 268 437 A2

**Description**

Silicon-Containing Copolyester and Method of Producing Same

This invention relates to a copolymer having excellent resistance to impact shock and to hydrolysis, or a novel silicon-containing polyester copolymer, and a method of producing same.

[Prior Art]

Polyesters, as thermoplastic resins having excel lent mechanical strength characteristics, such as tensile strength, tear strength, impact resilience, freeze resistance, and flex resistance, are widely used in the manufacture of various kinds of constructional materials.

Because of their excellent mechanical strength characteristics, these resins are becoming increasingly used under severe environmental conditions, but it can be pointed out that they have an inherent structural drawback of their own that under extreme conditions they are not well resistant to hydrolysis or to impact shock at low temperature. With a view to overcoming such drawback, various attempts have been made to improve or modify their characteristics through compositing or chemical modification.

One attempt for improvement through compositing is elastic polymer loading, typical examples of which are SBR, BN, and olefin elastomers. Further, there have been attempts for improvement of such composite through improvement of the bonding performance at the interface with the matrix resin, such that a glycidyl group is introduced into the olefin polymer (as in JP-A-61-60744 and JP A-61-60746, for example), or a carboxylic group is introduced into the olefin polymer (as in JP-A- 61-42561); these attempts can hardly be said to be successful, because no suf ficient interfacial reactivity is provided.

Attempts for improvement through chemical modification are typically such that an elastic segment is intramolecularly introduced. These attempts are disadvantageous in that intramolecular plasticization proceeds and as a result the intrinsic mechanical strength characteristics of the resin as such are largely sacrificed.

Summary of the Invention

After their series of studies conducted in order to solve these problems, the present inventors found that by introducing a certain siloxane soft segment into a polyester polymer through covalent linkage it would be possible to provide good resistance to impact shock and to hydrolysis without any loss of the original excellent properties of the base polymer, thereby to obtain a copolymer having very good serviceability. This led to the invention.

Accordingly, the present invention provides a silicon-containing copolyester in the form of a block copolymer consisting of 1 ~ 99% by weight of a siloxane segment expressed by the following general formula (A) and 99 ~ 1% by weight of a polyester segment expressed by the following general formula (B), wherein the polymerization degree of the siloxane segment is 1 ~ 2000 and the polymerization degree of the polyester segment is 1 ~ 1000:

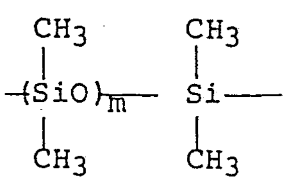

(A)

(in which m represents a value of 1 ~ 2000)

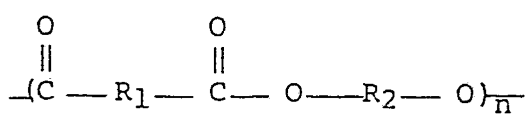

or

(B)

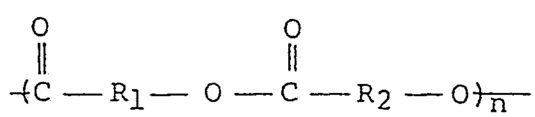

(in which $R_1$ represents one or more kinds of radicals selected from aromatic bivalent radicals having 6 ~ 12 carbon atoms or aliphatic bivalent radicals having 4 ~ 20 carbon atoms, $R_2$ represents one or more kinds of radicals selected from aromatic bivalent radicals having 6 ~ 20 carbon atoms or aliphatic bivalent radicals having 2 ~ 20 carbon atoms, and n represents a value of 1 ~ 1000), and a method of producing same.

A terminal reactive silicone oil expressed by the following general formula (C) or (D) is suitable for use as a

material compound necessary for forming aforesaid siloxane segment (A):

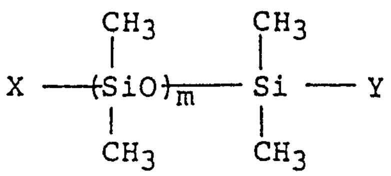

(C)

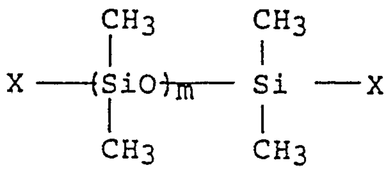

(D)

(X and Y each are a functional group selected from the group consisting of $-NH_2$, -OH, -ROH,

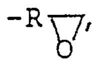

-RCOOH, -RCOOR′, and -OR;
R, R′ a hydrocarbon having 1 ~ 10 carbon atoms;
m: a value of 1 ~ 2000).

For X and Y, it is preferable to use a functional group selected from those having comparatively high reactivity, such as $-NH_2$, -ROH,

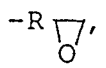

and -RCOOH.

A preferred range of polymerization degrees (m) for material (C) or (D) is 5 ~ 500, more preferably 10 ~ 200.

A material compound for formation of the polyester segment expressed by aforesaid general formula (B) consists of a polyester having an inherent viscosity of not more than 1.4 dl/g or an oligomer thereof, or monomers capable of forming an ester linkage.

Preferably, in the general formula (B), $R_1$ is an aromatic bivalent radical having 6 carbon atoms; $R_2$ is an aliphatic bivalent radical having 2 ~ 20 carbon atoms, more preferably, an aliphatic bivalent radical having 2 ~ 4 carbon atoms.

Most preferably, $R_2$ in the general formula (B) is an aliphatic bivalent radical having 4 carbon atoms.

As above mentioned, the polyester segment according to the general formula (B) is supplied in the form of a polymer having a skeleton arrangement thereof, an oligomer thereof, and/or monomers, and it is copolymerized with a siloxane compound expressed by the general formula (C) or (D) in a specified ratio. The polymer used as material compound is preferably of a relatively low polymerization degree from the standpoint of its reactivity with the siloxane compound. A preferred degree of polymerization is not more than 50.

The term "monomers" herein refers to compounds capable of forming an ester linkage or a combination thereof, that is, one or more kinds of compounds selected from the compounds expressed respectively by $X'$-$R_1$-$X'$, $X'$-$R_1$-$Y'$, $X'$-$R_2$-$Y'$, and $Y'$-$R_2$-$Y'$ (in which X′ represents -COOH, -COOR′, or -COCl; Y′ represents -OH or -O-COR).

For use as such monomers may be mentioned a combination of one or more kinds of dibasic compounds selected from the group consisting of terephthalic acid and derivatives thereof, isophthalic acid and derivatives thereof, and aliphatic dicarboxylic acids having 4 ~ 12 carbon atoms and derivatives thereof, and one or more kinds of diol compounds selected from the group consisting of bisphenols having not more than 20 carbon atoms and derivatives thereof, and aliphatic glycols having not more than 6 carbon atoms and derivatives thereof. hydroxy carboxylic acid such as hydroxybenzoic acid may be used here.

Preferred examples of these monomers are terephthalic acid and derivatives thereof, and aliphatic glycols having 2 ~ 4 carbon atoms.

The term "derivative" referred to herein means any compound which is chemically equivalent to a base compound: for example, hydroxy ester of carboxylic acid, carboxylic acid chloride, and halogen-, methoxy-, alkyl-, alkyl-substituted compounds of the base compound may be mentioned as such.

The proportion of the segment expressed by the general formula (A) in the copolymer is 1 to 99% by weight, preferably 5 to 75 percent by weight, most preferably 5 to 50 percent by weight.

In such silicon-containing copolymer, the polymerization degree of the siloxane segment (A) is normally 1 ~ 2000, preferably 5 ~ 500, and the polymerization degree of the polyester segment (B) is 1 ~ 1000, preferably 1

~ 50.

Such block copolymer may be produced by any known polycondensation process, as well as by any known ester exchange process.

Production methods applicable may be broadly classified into two: one is such that the compound according to the general formula (C) or (D) is caused to react with the monomers capable of forming an ester linkage, and the other is such that the general formula (C) or (D) compound is caused to react with the polyester or a prepolymer or oligomer thereof. One method of the former type is such that a terminal reactive silicone oil (C) or (D) is added to a combination of terephthalic acid or a derivative thereof and alkylene glycol or the like, and the mixture is heated to about 150 ~ 260°C in the presence of a catalyst for esterification or ester exchange reaction, the reaction product being then subjected to polycondensation under reduced pressure while any excess monomers or desorbed components are distilled away, whereby a block copolymer is obtained. One method of the latter type is such that the general formula (C) or (D) compound is added to a previously prepared polyalkylene terephthalate prepolymer or the like, and the mixture is heated to about 200 ~ 280°C in or without the presence of a catalyst so that the terminal functional groups of the prepolymer or any functional groups produced as a result of the decomposition of the prepolymer are brought into bond with the reactive radicals of the general formula (C) or (D) compound, whereby a block copolymer is obtained.

[Effects of the Invention]

The silicon-containing copolymer of the invention thus obtained has excellent mechanical strength characteristics, such as tensile strength, tear strength, impact resilience, freeze resistance, and flex resistance, since the siloxane segment (A) and the polyester polymer are united together through covalent linkage. The copolymer is provided with good resistance to impact shock and to hydrolysis without any loss of the characteristic properties of the base polymer. It is highly useful for various applications, such as automobile and electric and electronic parts, which involve use under severe environmental conditions.

Examples

The following examples are given to further illustrate the invention.

Example 1

A mixture of 194 parts by weight of dimethyl terephthalate, 198 parts by weight of 1.4-butanediol, and 200 parts by weight of silicone oil F99-258, with hydroxy end groups [a product of Nihon Unica K.K., viscosity 57cSt (at 25°C), number-average molecular weight 2000], after addition thereto of 200 ppm of tetrabutyl titanate, was subjected to ester exchange reaction while any methanol formed as a by-product was distilled away from the reaction system Stepwise heating was effected under reduced pressure. Ultimately, polycondensation was carried out at 270°C, 1 torr. The polybutylene terephthalate (PBT)/siloxane copolymer thus obtained was sparingly soluble in a common PBT solvent or a common silicone oil solvent. A NMR analysis showed that the copolymer was composed of 90% by weight of the PBT component and 10% by weight of the siloxane component. The melting point of the copolymer was 224°C.

Example 2

To a mixture of 1 mol of terephthalic acid dichloride, 1 mol of 1.4-butanediol, and 0.03 mol of amine end group silicone oil X22-161AS [a product of the Shin-Etsu Chemical Co., number-average molecular weight 900] was added a given amount of a catalyst. Ester exchange reaction and polycondensation were carried out in same way as in Example 1. The copolymer had 75 mol % (90 wt %) of the PBT component and 25 mol % (10 wt %) of the siloxane component. It had a melting point of 224°C.

Example 3

To 200g of a PBT having an inherent viscosity of 0.7 was added 100g of same silicone oil X22-161AS as used in Example 2. The mixture was heated to 260°C under reduced pressure. As a result, a block copolymer having a composition ratio of 50/50 (molar ratio) (75/25 in weight ratio) of PBT and siloxane. The melting point of the copolymer was 218°C.

Comparative Example 1

Dimethyl terephthalate and 1,4-butanediol were polymerized in same way as in Example 1, and a polybutylene terephthalate having an inherent viscosity of 0.8 was obtained.

The copolymers obtained in Examples 1 ~ 3 and Comparative Example 1 were respectively molded by an injection molding machine into test pieces. Tests were made of the test pieces for evaluation of them in impact resistance, hydrolysis resistance, tensile properties, and elongation. The results are shown in Table 1. Tests and measurements were made according to the following methods:

(1) Tensile properties ASTM D638 was followed mutatis mutandis.

(2) Impact resistance test ASTM D256 was followed mutatis mutandis.

(3) Hydrolysis resistance test Each test piece was steeped in hot water at 90°C for 20 days. Thereafter, it was subjected to drying at 100°C for 2 hours. The retained tensile strength at break of the test piece was measured.

The test on the Izod impact strength indicates the product's improved resistance to impact shock. The

hydrolysis resistance test shows the product's resistance to water at a high temperature.

Table 1

| | Expl.1 | Expl.2 | Expl.3 | Comp. Expl. 1 |
|---|---|---|---|---|
| PBT unit % (wt %) | 75 (90) | 75 (90) | 50 (75) | 100 (100) |
| Siloxane unit % (wt %) | 25 (10) | 25 (10) | 50 (25) | - |
| Tensile properties | | | | |
| Break strength ($kg/cm^2$) | 540 | 540 | 520 | 540 |
| Breaking extension (%) | 40 | 40 | 50 | 20 |
| Impact strength test | | | | |
| Izod impact strength (notched, notch side) ($kg/cm^2$) | 3.9 | 4.1 | 6.2 | 2.7 |
| Hydrolysis resistance test (%) | 80 | 82 | 90 | 60 |

**Claims**

(1) A silicon-containing copolyester in the form of a block copolymer consisting of 1 ~ 99% by weight of a siloxane segment expressed by the following general formula (A) and 99 ~ 1% by weight of a polyester segment expressed by the following general formula (B), wherein the polymerization degree of the siloxane segment is 1 ~ 2000 and the polymerization degree of the polyester segment is 1 ~ 1000:

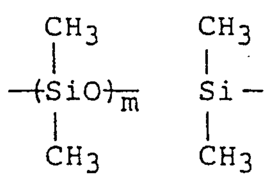

(A)

(in which m represents a value of 1 ~ 2000)

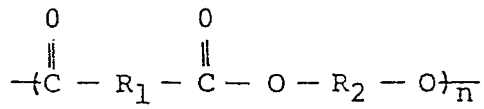

or (B)

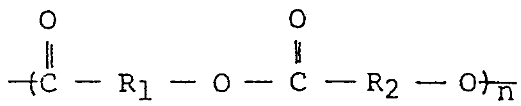

(in which $R_1$ represents one or more kinds of radicals selected from aromatic bivalent radicals having 6 ~ 12 carbon atoms or aliphatic bivalent radicals having 4 ~ 20 carbon atoms, $R_2$ represents one or more kinds of radicals selected from aromatic bivalent radicals having 6 ~ 20 carbon atoms or aliphatic bivalent radicals having 2 ~ 20 carbon atoms, and n represents a value of 1 ~ 1000).

(2) A copolyester as set forth in claim 1, wherein $R_1$ is an aromatic bivalent radical having 6 carbon atoms and $R_2$ is an aliphatic bivalent radical having 2 ~ 20 carbon atoms.

(3) A copolyester as set forth in claim 2, wherein $R_2$ is an aliphatic bivalent radical having 2 ~ 4 carbon atoms.

(4) A copolyester as set forth in claim 3, wherein $R_2$ is an aliphatic bivalent radical having 4 carbon atoms.

(5) A copolyester as set forth in any one of claims 1 to 4, wherein the polymerization degree of the siloxane segment (A) is 5 - 500 and the polymerization degree of the polyester segment (B) is 1 - 50.

(6) A copolyester as set forth in any one of claims 1 to 5, wherein the proportion of the siloxane segment (A) is 5 ~ 75% by weight and the proportion of the polyester segment (B) is 95 ~ 25% by weight.

(7) A method of producing a silicon-containing copolyester in the form of a block copolymer consisting of 1 ~ 99% by weight of a siloxane segment expressed by the following general formula (A) and 99 ~ 1% by weight of a polyester segment expressed by the following general formula (B), in which block copolymer the polymerization degree of the siloxane segment is 1 ~ 2000 and the polymerization degree of the polyester segment is 1 ~ 1000, characterized in that a polyester having an inherent viscosity of not more than 1.4 dl/g or an oligomer thereof or monomers capable of forming an ester linkage is caused to react with a terminal reactive silicone oil expressed by the general formula (C) or (D) under heating

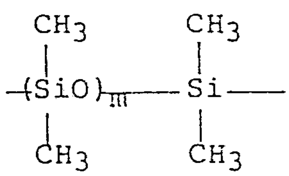

(A)

(in which m represents a value of 1 ~ 2000);

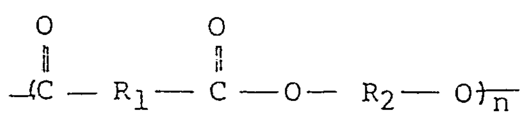

or (B)

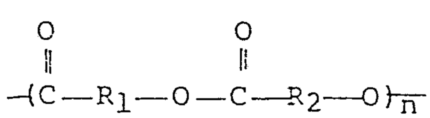

(in which $R_1$ represents one or more kinds of radicals selected from aromatic bivalent radicals having 6 ~ 12 carbon atoms or aliphatic bivalent radicals having 4 ~ 20 carbon atoms, $R_2$ represents one or more kinds of radicals selected from aromatic bivalent radicals having 6 ~ 20 carbon atoms or aliphatic bivalent radicals having 2 ~ 20 carbon atoms, and n represents a value of 1 ~ 1000);

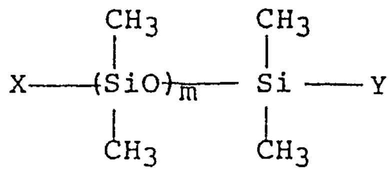 (C)

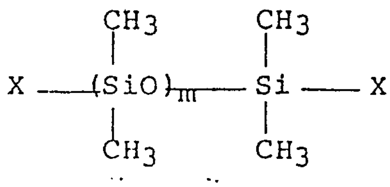 (D)

(X and Y each are a functional group selected from the group consisting of $-NH_2$, -OH, -ROH,

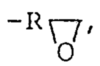

-RCOOH, RCOOR′, and -OR;
R, R′: a hydrocarbon having 1 ~ 10 carbon atoms;
a value of 1 ~ 2000).

(8) A method as set forth in claim 7, wherein the monomers capable of forming an ester linkage are one or more kinds of dibasic acid compounds selected from the group consisting of terephthalic acid or derivatives thereof, isophthalic acid or derivatives thereof, and aliphatic dicarboxylic acids having 4 ~ 12 carbon atoms or derivatives thereof, and one or more kinds of diol compounds selected from the group consisting of bisphenols having not more than 20 carbon atoms or derivatives thereof and aliphatic glycols having not more than 6 carbon atoms or derivatives thereof.

(9) A method as set forth in claim 8, wherein the monomer compounds capable of forming an ester linkage and the terminal reactive silicone oil are mixed in a wt% ratio of 1 ~ 99 : 99 ~ 1 and the mixture is heated to 150 ~ 260° C in the presence of a catalyst for esterification reaction, the reaction product being then subjected to polycondensation reaction under reduced pressure while any excess monomers or desorbed components are distilled away.

(10) A method as set forth in claim 7, wherein the oligomer is a polyalkylene terephthalate prepolymer.

(11) A method as set forth in claim 10, wherein the polyalkylene terephthalate prepolymer and the terminal reactive silicone oil are mixed in a wt% ratio of 1 ~ 99 : 99 ~ 1, the mixture being heated to about 200 ~ 280° C in or without the presence of a catalyst for reaction to produce the block copolymer.